Europäisches Patentamt

European Patent Office

Office européen des brevets

(19)

(11) Veröffentlichungsnummer: **0 448 984 A2**

(12) # EUROPÄISCHE PATENTANMELDUNG

(21) Anmeldenummer: 91103139.1

(22) Anmeldetag: 02.03.91

(51) Int. Cl.⁵: **G07C 5/08**

(30) Priorität: 29.03.90 DE 4010025

(43) Veröffentlichungstag der Anmeldung:
02.10.91 Patentblatt 91/40

(84) Benannte Vertragsstaaten:
**ES FR GB IT NL SE**

(71) Anmelder: **MERCEDES BENZ AG**
**Mercedesstrasse 136**
**W-7000 Stuttgart 60(DE)**

(72) Erfinder: **Sacco, Bruno**
**Wendelsteinstrasse 14**
**W-7032 Sindelfingen(DE)**
Erfinder: **Mutschler, Jürgen**
**Würmersheimer Strasse 2**
**W-7559 Au am Rhein(DE)**
Erfinder: **Jambor, Arno**
**Pregitzer Strasse 16**
**W-7143 Vaihingen(DE)**
Erfinder: **Seeger, Wilhelm**
**Eberhardstrasse 19**
**W-7270 Nagold(DE)**
Erfinder: **Seidenfaden, Gerd**
**Hirschbergerstrasse 44**
**W-7250 Leonberg(DE)**

(54) **Tastatur- und Display-System zur Bedienung mehrerer Fahrzeugkomponenten in einem Kraftfahrzeug.**

(57) Die vorliegende Erfindung betrifft eine Zuordnung einer Anzeige eines Display zu den Tasten einer Tastatur, wobei ein Betätigen der Tasten unter Berücksichtigung einer einheitlichen Bedienphilosophie für alle Fahrzeugkomponenten zu verschiedenen Einstellungen dieser Fahrzeugkomponenten in einem Kraftfahrzeug führt.

*Fig. 2*

Die Erfindung betrifft ein Tastatur- und Display-System zur Bedienung mehrerer Fahrzeugkomponenten in einem Kraftfahrzeug gemäß dem Oberbegriff des Patentanspruches 1.

Es ist bereits ein gattungsgemäßes Tastatur- und Display-System bekannt (DE-Z: auto motor sport, Heft 25/1985, S. 40-44), wonach im Rahmen eines Computer-Informationssytems in einem Kraftfahrzeug die Bedienung verschiedener Audio-Geräte beschrieben wird, wobei die einzelnen Audio-Geräte durch Drücken entsprechender Tasten angewählt werden. Dabei wird auf einem Display eine symbolische Darstellung des angewählten Gerätes angezeigt sowie gerätespezifische Informationen ausgegeben. Bei einem Vergleich der abgebildeten symbolischen Darstellungen des Cassettenspielgerätes und des CD-Spielgerätes zeigt sich, daß die Anzeige für die Lautstärke, die Balance, die Höhen, die Tiefen für beide Geräte jeweils an demselben Ort des Display angezeigt werden.

Nachteilig wirkt sich entsprechend der Offenbarung dieser Schrift aus, daß nur das Cassettenspielgerät und das CD-Spielgerät eine weitgehend einheitliche symbolische Darstellung auf dem Display aufweisen. Außerdem werden auch Funktionen auf dem Bildschirm sichtbar, die nur selten aufgerufen werden, wie z.B. die Einstellung der Balance, der Höhen und der Tiefen.

Des weiteren ist es nach der DE 37 14 707 A1 bekannt, den Tasten eines Tastenfeldes mehrere Funktionen zuzuweisen, wobei die momentan durch eine Anwahl des Benutzers festgelegten Funktionen der Tasten des Tastenfeldes auf einem Bildschirm angezeigt werden. Nach der Darstellung in der DE 37 14 707 A1 ist dieses Tastenfeld für Datenverarbeitungsgeräte vorgesehen, d.h. daß mittels der Tasten der Ablauf eines Programmes in einem Datenverarbeitungsgerät beeinflußt werden soll.

Außerdem ist es nach der DE 34 13 604 A1 bekannt, ein universelles Verfahren zur Benutzung elektronisch gesteuerter technischer Systeme mit geringer Zahl von Eingabetasten so zu gestalten, daß es möglichst universell einsetzbar ist, d.h., daß es dem Benutzer ermöglicht werden soll, die Bedienung vieler technischer Geräte in einem einzigen Schritt zu erlernen. Weiters wird ausgeführt, daß die Benutzung verschiedener Geräte mit einem einzigen Ein-/Ausgabegerät ermöglicht werden soll, daß die Geräte eine einheitliche Schnittstelle aufweisen, daß die Tastatur zur Bedienung der technischen Systeme in einem getrennten Baustein untergebracht werden kann und daß eine unmittelbare Zuordnung der einzelnen Funktionen zu den Tasten erfolgt, indem auf einem Display die einzelnen Funktionen dargestellt und in unmittelbare Verbindung zu den Tasten gebracht werden. Weiters ist angegeben, daß die Tastatur als Fernbedienung ausgebildet sein kann und daß einige Tasten zur Verfügung stehen, durch deren Betätigen der Benutzer einige Funktionen ständig abrufbereit erhält. In dem Ausführungsbeispiel gemäß der DE 34 13 604 A1 ist als Beispiel angegeben, daß eine dieser Funktionen die Lautstärkeeinstellung eines Radiogerätes sein kann.

Aufgabe der Erfindung ist es, ein Tastatur- und Display-System zur Bedienung mehrerer Fahrzeugkomponenten in einem Kraftfahrzeug so auszubilden, daß für den Benutzer dieser Fahrzeugkomponenten mit einem einzigen Ein-/Ausgabegerät eine leichte Bedienbarkeit gewährleistet ist.

Diese Aufgabe wird bei einem gattungsgemäßen Tastatur- und Display-System zur Bedienung mehrerer Fahrzeugkomponenten in einem Kraftfahrzeug erfindungsgemäß mit den kennzeichnenden Merkmalen des Anspruchs 1 gelöst, wobei die Merkmale der Unteransprüche vorteilhafte Aus- und Weiterbildungen kennzeichnen.

Bei dem erfindungsgemäßen Tastatur- und Display-System ist eine räumliche Trennung von der Tastatur und dem Display vorgesehen. Durch Drücken einer der Fahrzeugkomponentenauswahltasten auf der Tastatur wird die entsprechende Fahrzeugkomponente ausgewählt. Mit dieser Auswahl einer Fahrzeugkomponente wird auf dem Display eine symbolische Darstellung der entsprechenden Fahrzeugkomponente ausgegeben. Diese symbolische Darstellung beinhaltet eine Zuordnung von Fahrzeugkomponenten-spezifischen Einstellmöglichkeiten zu bestimmten Tasten der Tastatur. Gemeinsame Einstellmöglichkeiten der Fahrzeugkomponenten werden dabei an jeweils derselben Stelle des Bildschirms in jeweils derselben Darstellungsform angezeigt. Dabei sind Tasten vorgesehen, die eine unveränderliche Funktion ausführen. Beispielweise können die Fahrzeugkomponentenauswahltasten fest vorgegeben sein, so daß es möglich ist, von jeder Ebene der Einstellungen einer der Fahrzeugkomponenten auf eine andere Fahrzeugkomponente umzuschalten.

Ein Ausführungsbeispiel der Erfindung ist in der Zeichnung schematisch dargestellt und wird im folgenden näher beschrieben. Es zeigen:

Fig. 1: Eine symbolische Darstellung des Radios auf dem Display,

Fig. 2: eine Tastatur zur Bedienung mehrerer Fahrzeugkomponenten und

Fig. 3: eine Darstellung des Display nach Betätigen einer Informationstaste.

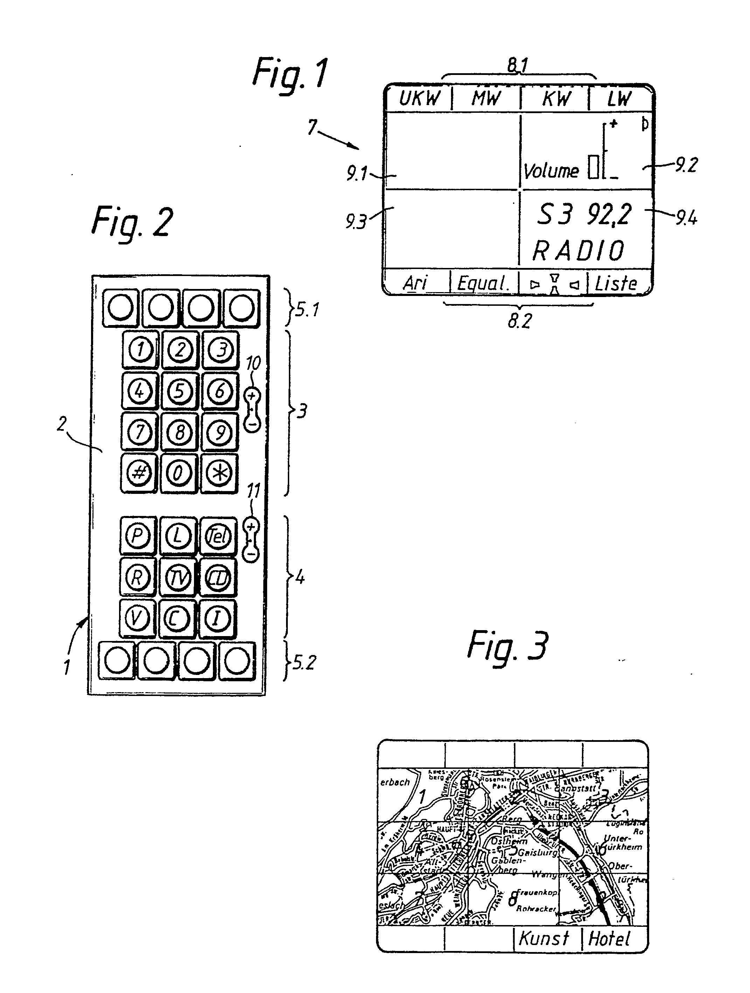

Wie aus Fig. 1 ersichtlich, ist das Display 7 in verschiedene Bereiche 8.1, 8.2, 9.1-9.4 unterteilt. In der Darstellung nach Fig. 1 ist das Display abgebildet, das nach der Anwahl des Radiogerätes mittels einer der Fahrzeugkomponentenauswahltasten 4 erscheint. In dem rechten unteren Feld 9.4 erscheint die symbolische Darstellung der angewählten Fahrzeugkomponente. In dem Falle, daß das angewählte Gerät das Radio ist, erscheint in demselben Feld der momentan eingestellte Sender. Anstatt des Schriftzuges "Radio" kann auch eine symbolische Darstellung eines Radiogerätes dargestellt sein. In dem rechten oberen Feld 9.2 erscheint die Anzeige bzgl. der Lautstärke. In dem Ausführungsbeispiel nach Fig. 1 sind Einstellmöglichkeiten, die selten benutzt werden, für alle Fahrzeugkomponenten in eine untere Ebene verlagert, so daß die momentane Einstellung dieser Einstellmöglichkeiten nur nach der Anwahl dieser in 8.2 dargestellten Einstellmöglichkeit zu sehen ist. Zu diesen Einstellmöglichkeiten gehört z.B. der Equalizer bzw. die Einstellung der Höhen und der Tiefen sowie der Balance-Regler. Durch Anwahl der Einstellmöglichkeit "Liste" wird in dem Ausführungsbeispiel nach Fig. 1 in den Feldern 9.1 und 9.3 eine Auflistung der momentan mit fest eingestellten Stationstasten einstellbaren Sendern angezeigt. Bei Anwahl einer anderen Fahrzeugkomponente ändert sich die Darstellung dahin gehend, daß in dem Feld 9.4 die angewählte Fahrzeugkomponente angezeigt wird, wobei bei der Anwahl des CD-Spielgerätes die Nummer des momentan gespielten Titels dieser CD in dem Feld 9.4 angezeigt werden kann. Außerdem sind nach der Anwahl des Cassetten- bzw. CD-Spielgerätes bei den Einstellmöglichkeiten 8.1 und 8.2 zweckmäßigerweise ein schneller Vor- und Rücklauf vorhanden. Diese aufgezählten Einstellmöglichkeiten sowie gerätespezifische Einstellmöglichkeiten werden in dem Ausführungsbeispiel nach Fig. 1 in den beiden waagrechten Leisten 8.1 und 8.2 am oberen und unteren Displayrand angezeigt. Zu den Einstellmöglichkeiten der Funktionstasten 5.1 und 5.2 sind Darstellungen 8.1 und 8.2 dieser Einstellmöglichkeiten auf dem Display 7 zugeordnet derart, daß ein unmittelbarer Zusammenhang der Funktionstasten 5.1 und 5.2 zu den Darstellungen 8.1 und 8.2 besteht.

In Fig. 2 ist eine Anordnung der Tasten auf einer Fernbedienung 1 gezeigt. Die Tastatur 2 ist dabei in mehrere Felder 3-5 unterteilt, wobei vorzugsweise zwei waagrechte Leisten 5.1 und 5.2 von Tasten mit variabler Belegung der Einstellmöglichkeiten am oberen und am unteren Rand der Tastatur 2 vorhanden sind, wobei die Belegung der Einstellmöglichkeiten den im Display 7 in den beiden Leisten 8.1 und 8.2 am oberen und unteren Displayrand jeweils dargestellten Einstellmöglichkeiten entspricht. In der Tastatur 2 ist ein weiteres Tastenfeld 4 vorhanden, das die vorzugsweise ständig abrufbereite Fahrzeugkomponentenauswahltasten enthält. Diese Fahrzeugkomponentenauswahltasten erhalten also keine variable Belegung. Die Tasten dieses Tastenfeldes 4 enthalten zweckmäßigerweise symbolische Darstellungen der anwählbaren Fahrzeugkomponente. Im einzelnen sind dies:

| Taste "Tel" | - Telefon + Telefax |
| Taste "R" | - Radiogerät |
| Taste "TV" | - Fernsehgerät |
| Taste "CD" | - CD-Spielgerät |
| Taste "V" | - Video-Gerät |
| Taste "C" | - Cassetten-Spielgerät. |

Es ist in Erweiterung dieses Ausführungsbeispieles möglich, die Bedienung weiterer Fahrzeugkomponenten durch eine Erweiterung des Tastenfeldes 4 vorzunehmen. Als Beispiel seien hier folgende nicht dargestellte Tasten genannt:

| Taste "KL" | - Klimaanlage |
| Taste "ZF" | - Zielführung |
| Taste "RE" | - Reiserechner. |

Darüber hinaus ist in dem Tastenfeld 4 noch eine Taste "L" vorhanden, die eine Rückkehr in den logisch darüber liegenden Zustand ermöglicht, d.h. beispielsweise, daß nach der Anwahl des Radiogerätes auf dem Display eine Darstellung entsprechend Fig. 1 erfolgt. Wird dann die rechte Taste der Funktionstasten 5.2 betätigt, wird eine Liste der Sender angezeigt, die durch Stationstasten abrufbar sind. Wird dann durch Betätigen einer der Tasten des Ziffernblockes 3 einer der angezeigten Sender ausgewählt und anschließend die Taste "L" betätigt, ist dieser Sender aktiviert und auf dem Display erscheint wieder eine Darstellung entsprechend Fig. 1. Das heißt also, daß durch Betätigen der Taste "L" die Einstellungen der unteren Ebene fixiert werden und ein Übergang zu der übergeordneten Ebene erfolgt. Außer dieser Taste "L" sind noch eine Taste "P", die entsprechend dem angewählten Gerät eine Programmierung ermöglicht (beispielsweise Senderwahl zur Stationstastenbelegung bei Radio oder TV) und eine Taste "I" vorhanden, nach deren Betätigen auf dem Display 7 Informationen über die örtlichen Gegebenheiten angezeigt werden. Des weiteren ist noch ein Ziffernblock 3 vorgesehen beispielsweise zur Bedienung des Autotelefons, zur Kanalanwahl bei TV-Geräten, als Stationstasten bei Radio-Geräten, als Titelanwahl bei CD-Geräten etc.. Ist ein Autotelefon vorhanden, kann die die Tastatur 2 enthaltende Fernbedienung 1 der Telefonhörer des Autotelefons sein. Außerdem kann die Tastatur 2 noch Alpha-Tasten enthalten, die beispielweise verwendet werden können, um Namensregister oder Telefonnummern zu speichern. Ist in dem Kraftfahrzeug ein PC vorhanden, kann das Display 7 mit entsprechender Zusatztastatur gleichzeitig als Display für den PC verwendet werden. Außerdem sind in der Tastatur 2 der Fernbedienung 1 noch Regler für Funktionen vorhanden, die jederzeit bedienbar sein sollen, wie z.B. ein Lautstärkeregler 10 und ein Scanner 11 für den Sendersuchlauf nach Anwahl des Radio- oder TV-Gerätes bzw. für die Titelsuche nach der Anwahl des CD-Spielgerätes. Ebenso kann eine Ein-/Aus-Taste für das gesamte System vorgesehen sein.

Fig. 3 zeigt eine Darstellung des Displays 7 nach Betätigen der Taste "I" des Tastenfeldes 4 der Tastatur 2. Durch Betätigen der entsprechenden Taste des Ziffernblockes 3 erfolgt dann eine Darstellung des entsprechenden Ausschnitts auf der gesamten Fläche 9.1, 9.2, 9.3 und 9.4 des Displays 7. Erreicht diese Darstellung einen bestimmten Maßstab, erscheint bei der Darstellung der Einstellmöglichkeiten 8.1 und 8.2 verschiedene Anwahlmöglichkeiten zu Gegebenheiten in dem dargestellten Kartenausschnitt wie z.B. eine Liste der Hotels, eine Ausgabe von Informationen zu Sehenswürdigkeiten.

Ein typischer Ablauf der Bedienung mehrerer Fahrzeugkomponenten gestaltet sich mit dem erfindungsgemäßen Tastatur- und Display-System wie folgt:
Nachdem das Tastatur- und Display-System eingeschaltet wurde, erfolgt durch Drücken einer der Tasten 4 eine Anwahl einer der Fahrzeugkomponenten. Durch Drücken der Taste mit der Aufschrift "Radio" wird dann beispielweise das Radio-Gerät ausgewählt. Auf dem Display erscheint dann eine Anzeige entsprechend der Darstellung der Fig. 1. Durch Drücken einer der Tasten 5.1 wird dann entsprechend der Darstellung 8.1 der Frequenzbereich (UKW, MW, KW, LW) ausgewählt. Durch Drücken einer der Tasten des Ziffernblockes 3 kann ein fest eingestellter Sender angewählt werden. Die Tasten des Ziffernblockes 3 sind somit Stationstasten. Durch Drücken einer der Tasten 5.2 sind weitere Einstellmöglichkeiten entsprechend der Darstellung 8.2 gegeben wie z.B. die Einstellung des Equalizers, die Balance usw.. Es ist dabei grundsätzlich Zu jedem Zeitpunkt möglich, durch Drükken einer der Tasten 4 ein anderes Gerät anzuwählen. Es kann weiterhin eine Löschtaste "L" vorgesehen sein, mit der die letzte Eingabe wieder gelöscht werden kann wie beispielsweise die letzte Zifferneingabe oder die letzte Fahrzeugkomponentenauswahl. Außerdem können in der Tastatur 2 noch Regler oder Schalter vorgesehen sein für Funktionen, die zu jeder Zeit bedienbar sein sollen, wie z.B. zur Regelung der Lautstärke.

**Patentansprüche**

1. Tastatur- und Display-System zur Bedienung mehrerer Fahrzeugkomponenten in einem Kraftfahrzeug,
   - wobei durch Drücken von einer Taste einer Tastatur eine der Fahrzeugkomponenten ausgewählt wird,
   - worauf auf einem Display eine symbolische Darstellung der ausgewählten Fahrzeugkomponente erfolgt,
   - wobei die symbolische Darstellung Einstellmölichkeiten der Fahrzeugkomponente beinhaltet und Informationen über die momentane Einstellung liefert,
   - wobei jeweils identische Einstellgrößen der Fahrzeugkomponenten an jeweils demselben Ort des Displays in jeweils identischer Weise dargestellt werden,
   - wobei Fahrzeugkomponenten-spezifische Einstellmöglichkeiten der Fahrzeugkomponenten jeweils Fahrzeugkomponenten-spezifisch an einem definierten Ort des Display dargestellt werden,
   - wobei eine definierte Zuordnung der Einstellmöglichkeiten der Fahrzeugkomponenten zu den Tasten der Tastatur besteht, wobei die Tastatur als gesonderte Einrichtung von dem Display getrennt ist,
   **dadurch gekennzeichnet,**
   - daß die Tastatur (2) als gesonderte Einrichtung eine Fernbedienung (1) ist,
   - daß auf der Tastatur (2) nur für die Fahrzeugkomponentenauswahl reservierte Tasten (4) vorhanden sind und
   - daß auf der Tastatur (2) eine oder mehrere Tasten für wenigstens eine Einstellmöglichkeit der Fahrzeugkomponenten reserviert ist/sind, die jederzeit bedienbar sein soll/sollen und
   - daß die Anordnung der Tasten (5.1, 5.2) für die Einstellmoglichkeiten der Anordnung der symbolischen Darstellung (8.1, 8.2) der Einstellmöglichkeiten auf dem Display entspricht.

2. Tastatur- und Display-System nach Anspruch 1,
   **dadurch gekennzeichnet,**
   daß auf der Tastatur (2) ein Ziffernblock (3) vorhanden ist.

3. Tastatur- und Display-System nach Anspruch 2,
   **dadurch gekennzeichnet,**
   daß die Tastatur (2) in den Hörer des Telefons integriert ist.

4. Tastatur- und Display-System nach einem der Ansprüche 1 bis 3,
   **dadurch gekennzeichnet,**
   daß das Display (7) gleichzeitig als Bildschirm eines PC dient, wenn ein PC in dem Kraftfahrzeug vorhanden ist.

5. Tastatur- und Display-System nach einem der Ansprüche 1 bis 4,
   **dadurch gekennzeichnet,**
   daß auf der Tastatur (2) Tasten (4) vorhanden sind, die Einstellmöglichkeiten beinhalten, die dauernd verfügbar sein sollen.

6. Tastatur- und Display-System nach einem der Ansprüche 1 bis 5,
**dadurch gekennzeichnet**,
daß durch Anwahl einer der Tasten des Tastenfeldes 4 Informationen über die örtlichen Gegebenheiten auf dem Display 7 angezeigt werden können.

## Fig. 1

8.1

| UKW | MW | KW | LW |

Volume

S3 92,2

RADIO

| Ari | Equal. | ▷ ▽ ◁ | Liste |

8.2

7, 9.1, 9.2, 9.3, 9.4

## Fig. 2

5.1

1 2 3
4 5 6
7 8 9
# 0 *

10, 3, 11

P L Tel
R TV CD
V C I

4

5.2

2, 1

## Fig. 3

erbach

Kunst | Hotel